# EUROPEAN PATENT SPECIFICATION

(11) **EP 1 064 760 B1**
(45) Date of publication and mention of the grant of the patent: **02.01.2002**
(21) Application number: 98955571.9
(22) Date of filing: 10.11.1998
(51) Int. Cl.: H04L 12/56

(54) **ROUTING METHOD FOR WIRELESS AND DISTRIBUTED SYSTEMS**
LEITWEGLENKUNGSVERFAHREN FÜR SCHNURLOSE UND VERTEILTE SYSTEME
PROCEDE DE ROUTAGE POUR SYSTEMES DE COMMUNICATION SANS FIL ET REPARTIS ET DISPOSITIFS CONNUS A CET EFFET

(30) Priority: 11.03.1998 EP 98810208
(43) Date of publication of application: 03.01.2001
(73) Proprietor: Swisscom Mobile AG, 3050 Bern (CH)
(72) Inventor: LOHER, Urs, CH-3072 Ostermundigen (CH)
(74) Representative: BOVARD AG - Patentanwälte
(86) International application number: EP9807222
(87) International publication number: WO9946899

(56) References cited:
- WO-A-97/17813
- WO-A-97/18657
- US-A- 4 999 833
- US-A- 5 029 334
- US-A- 5 030 948
- US-A- 5 430 729
- US-A- 5 452 294
- US-A- 5 546 445
- US-A- 5 577 028
- US-A- 5 579 307
- US-A- 5 610 595
- JUBIN J ET AL: "THE DARPA PACKET RADIO NETWORI PROTOCOLS" PROCEEDINGS OF THE IEEE, vol. 75, no. 1, January 1987 (1987-01), pages 21-32, XP002061709
- TOH C -K: "ASSOCIATIVITY-BASED ROUTING FOR AD-HOC MOBILE NETWORKS" WIRELESS PERSONAL COMMUNICATIONS, vol. 4, no. 2, 1 March 1997 (1997-03-01), pages 103-139, XP000728588 ISSN: 0929-6212

## Description

The present invention relates to a routing method for wireless and distributed systems and to devices adapted accordingly. Specifically, the present invention relates to a method for routing packets within a wireless telecommunication network, said packets being transmitted from one source station in said network to at least one sink station through one or a plurality of relay stations, and to adapted mobile stations which can be used in such a wireless telecommunication network.

A method for routing data packets within a wireless network is described in the patent application WO 97/32419. The method described therein is a random multiple path tabular routing method, wherein a plurality of individual nodes are programmed to serve as repeater nodes, said repeater nodes forming multiple programmed communication paths between a central node and some selected individual nodes. However, the method described in WO 97132419 is not suitable for a wireless telecommunication network with mobile stations because it is deterministic to the extent that routing tables are used to program the multiple communication paths based on connectivity information obtained during the network initialisation process.

The patent application WO 97/24840 describes a method for automatically initialising a wireless, packet-hopping network, such as a building system control network, whereby each node in the network determines its entire connectivity, by transmitting initialisation packets requesting a response from the nodes receiving these packets, and then routes this connectivity information to a central computer. The exchange of packets for requesting and transmitting connectivity information by all nodes in the network represents a network overhead which can be acceptable as a one-time initialisation process in a fixed network but which would be disadvantageous in a network with mobile stations where this process would have to be repeated frequently Furthermore, storing routing information in a central computer means that the nodes in the network need to request that information from this central computer when they route a packet to another node in the network.

The patent application DE 3337648 A1 describes a radio network with a plurality of mobile stations, each of which can function as a relay station between pairs of communicating mobile stations. In the radio network described in DE 3337648 A1, data about the state of the network, the possible routes to all other mobile stations, and the availability and operational states of the individual connections is determined and maintained by each mobile station and, on request, passed on to requesting other mobile stations. Thus, DE 3337648 A1 describes a radio network, in which mobile stations can provide routes between communicating stations without the need for centralized routing information, but by periodically requesting routing information from other mobile stations and by storing and maintaining this routing information locally. Consequently, in the radio network described in DE 3337648 A1, network capacity is used by all the mobile stations in the network for requesting and transmitting routing information from and to each other.

In the patent US 5 546 445, a cellular telephone system including a plurality of cell sites and a mobile telephone switching office is described, wherein selection of a cell site most appropriate for a call associated with a mobile unit is made based on the geographic location of the mobile unit as opposed to the commonly used strength of the signal associated with the call. According to the patent US 5 546 445, the geographic location is determined by means of a GPS (Global Positioning System) receiver included in the mobile unit and is relayed to the mobile telephone switching office. The mobile telephone switching office uses a look-up table, containing the geographic location of each cell site in the cellular system, to determine which cell site is most appropriate for use by the mobile unit.

In the patent US 4 999 833, a packet radio network is described, wherein packet radios may be mobile and are provided with an artificial intelligence module applying heuristic rules to a knowledge base to select routing paths through the network. According to the patent US 4 999 833, the knowledge base may be built by the packet radios monitoring their neighbours and extracting information from the headers transmitted as well as by requesting and obtaining knowledge base information from neighbouring packet radios.

Jubin J. et. al. describe in "The DARPA Packet Radio Network Protocols," Proceedings of the IEEE, vol. 75, no.1, January 1987, pages 21 to 32, XP002061709, algorithms and protocols for a packet radio network, wherein data is exchanged, via a common radio channel, between computers that are geographically separated, enabling computer network access to mobile computers and terminals. In the DARPA Radio Network, computers are attached to a packet radio via a wire high-level data link control. Packets are routed in the DARPA Radio Network either to another packet radio over the radio channel or to an attached device via the wire interface. In the DARPA Radio Network each packet radio gathers and maintains information about the network topology in order to make decisions about how to route data through the network to any destination. Packet radios periodically announce their existence and their information about the network topology by broadcasting special organisation packets. In the packet radios, tables about neighbouring packet radios are maintained by monitoring the special organisation packets and by monitoring data packets. In so called tier tables, packet radios continuously gather information, from the special organisation packets and from the headers of data packets, about packet radios that are more than one hop away, so that ultimately every packet radio knows the number of hops to any prospective destination packet radio and which packet radio is the next packet radio enroute to that destination packet radio. Packets are forwarded in the DARPA Radio Network over a single path through the radio network, each packet radio using the information in the packets' headers and in its neighbour and tier tables.

It is an object of this invention to propose a new and improved routing method for wireless telecommunication networks, and adapted mobile stations which can be used in such wireless telecommunication networks.

According to the present invention, these objects are achieved particularly through the features of the independent claims. In addition, further advantageous embodiments follow from the dependent claims and the description.

According to the proposed method for routing packets, for example data or speech packets, whereby packets are transmitted in a wireless telecommunication network from one source station to at least one sink station through one or a plurality of relay stations, whereby at least one of said relay stations is a mobile station, for example a mobile phone station, and whereby at least two of said stations are neighbour stations, wherein packets can be directly transmitted through a wireless connection between each pair of neighbour stations, these objects are particularly achieved in that the routing of packets in at least one of the mobile relay stations is based on information autonomously monitored by the mobile relay station about its neighbour stations only, this information being obtained by the mobile relay station monitoring any packet that can be received at said mobile relay station, extracting said information from these monitored packets, for example identification information about the neighbour station that sent the particular packet, and locally storing the extracted information, for instance in a table with information about neighbour stations. Routing in a mobile relay station based on information autonomously gathered by the mobile relay station monitoring the traffic of the neighbouring stations, has the advantage that there is no need for exchanging routing information, respectively exchanging requests for routing information, between the mobile relay stations or between a mobile relay station and a central routing database. Thus, there is no additional burden on the network for establishing routing information in a mobile relay station, nor is there a need for a central database with routing information. As one skilled in the art will recognise, these improvements will result in a technically improved functioning of wireless networks, in particular an easier and cheaper routing of connections between mobile stations, for instance mobile phone stations.

Depending on the embodiment variant, each packet is routed in a mobile relay station either to one or to possibly more than one next station chosen from among the set of all of its neighbour stations, unless said mobile relay station is the sink station. The approach of both variants has the advantage that mobile stations can communicate without the involvement of any base stations. It is even possible that the approach results in a direct wireless connection between two mobile stations without involvement of an intermediate relay station. The variant in which more than one neighbour may be selected as a next relay station has the additional advantage that each packet can be routed concurrently along different paths; thereby, the reliability and efficiency of the routing method can potentially be improved.

Preferably, each packet contains a header indicating the source station which emitted the packet, at least one sink station to which the packet is destined, and at least one neighbour station to which the packet will be transmitted in the next hop. By preference, the field containing the information about the neighbour station(s) of the next hop is replaced in each intermediate relay station.

In a variant, each mobile relay station checks for each packet received if it has already relayed that packet, and in that case it checks if the packet received coincides with the packet previously relayed and otherwise requests a correction, which, for instance, consists in the respective mobile relay station re-transmitting the packet to at least one alternative neighbour station. This variant has the advantage that it makes it possible to correct transmission errors in packets without having to implement an explicit feedback channel for that purpose.

Two different variants are proposed to handle the situation where a mobile relay station is not able to further relay a received packet. In the first respective variant, the said mobile relay station sets a flag in the packet header and sends the packet to all or some of its known neighbours, which neighbours receiving such a said packet check if they can relay that packet to an alternative neighbour station. In the second respective variant, each mobile relay station checks for each packet which it transmitted whether that packet is relayed by at least one of its neighbour stations, and if this is not the case it re-transmits that packet to at least one alternative neighbour station. Both of these variants have the advantage that they help prevent packets from getting lost in a "dead end", even if this means that packets may have to be routed "backwards" in order to find an alternative path to the sink.

According to the present invention, the choice of the next station made in the mobile relay stations depends on the position of said next station, which position is determined, for instance, by a positioning system, for example GPS or a TPS, in at least some of said mobile stations and which position is communicated to the neighbour stations. For instance, the position may be a part of the above-mentioned identification information and may thus be gathered by neighbouring mobile relay stations monitoring the local traffic, as was explained above. Specifically, the decision may be based on the distance between the next station and the sink station and/or on the distance between the next station and the mobile relay station. This approach has the advantage that there is no need to flood the network with packets in random directions or to undertake complex enquiries about the topology of the network. Alternatively or in addition, the decision may also be based on the propagation conditions, traffic conditions, and/or available bandwidth between the mobile relay station and the next station, and/or on the cost and/or the measured or expected delay for transmitting a packet to said next station. The position may also be used to identify and/or address each mobile station in the network.

According to the invention the objects mentioned above are particularly also achieved in that at least some of the mobile stations, for example mobile radio phones, which comprise sending and receiving means for directly sending and receiving packets to and from a neighbour mobile station through a wireless connection and which can be used in the wireless communication network as mobile relay stations, comprise processing means for autonomously monitoring information about at least some of its neighbour stations by extracting information from any packet that can be received at the mobile relay station and by storing the extracted information in a local memory of the mobile relay station, for instance arranged in a table with information about the neighbour stations, and for making routing decisions for packets sent to the mobile relay station based on said stored information.

The present invention will be explained in more detail, by way of example, with reference to the drawings in which:
Figure 1 is a conceptual representation of a wireless network showing a source, a sink, neighbours and mobile relay stations.
Figure 2 shows an example of the structure of a packet to be transmitted in a wireless network.
Figure 3 is a flow chart illustrating the steps executed for carrying out the method of the present invention.
Figure 4 is an alternative flow chart illustrating the steps executed for carrying out the method of the present invention.

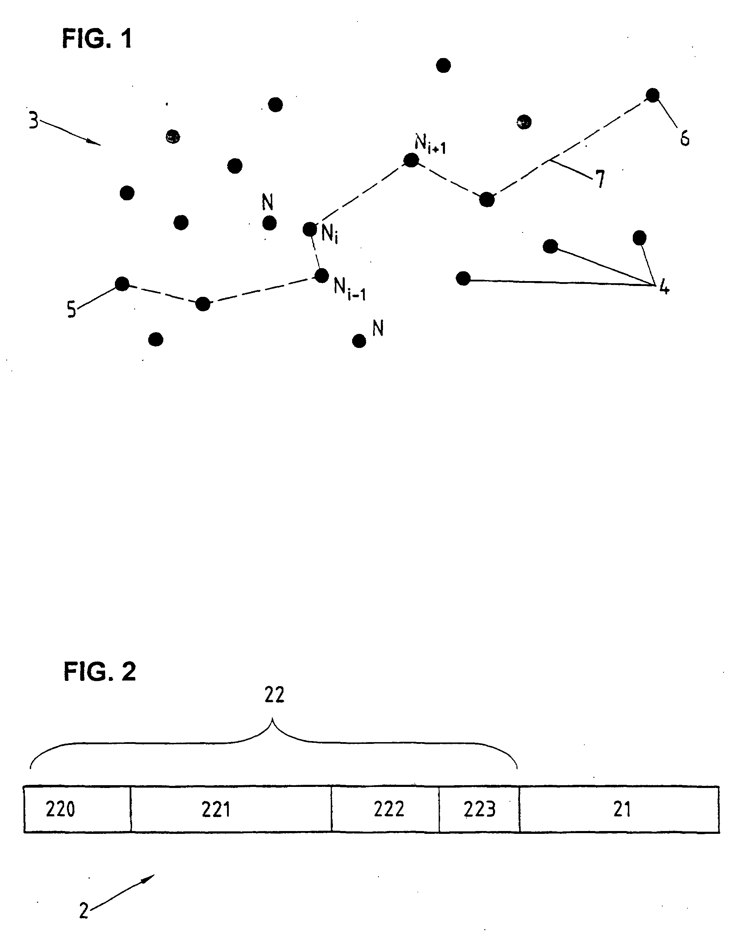

In Figure 1, the reference numeral 3 refers to a wireless telecommunication network, for example a mobile radio network, e.g. a local area or wide area wireless network, which comprises a plurality of nodes 4, 5, 6, N, Nᵢ₋₁, Nᵢ, Nᵢ₊₁, indicated by black dots, each representing a mobile station, for example a mobile radio phone. In this wireless network 3, a packet 2, as illustrated in Figure 2, is guided by means of the method according to the present invention from its origin 5, i.e. its source 5, to its destination 6, i.e. its sink 6, along the path 7 indicated by the dashed line. For a packet 2 to get to its destination 6, it may require making numerous hops at intermediate nodes Nᵢ₋₁, Nᵢ, Nᵢ₊₁, so-called relay nodes or relay stations, whereby an intermediate node Nᵢ receives a packet 2 from a previous node Nᵢ₋₁ and passes it on, i.e. relays it, to the subsequent node Nᵢ₊₁.

As is illustrated in Figure 2, a possible structure of a data packet 2 comprises a header field 22 and a data field 21, which data field 21 may contain user data, e.g. textual, numeric, or speech information, and further protocol information used by protocol layers which are not subject of this invention. A possible structure of the packet header 22 comprises a field 220 containing address and/or identification information about one or more sinks 6, i.e. destinations 6, of the data packet 2, a field 221 containing address and/or identification information about one or more neighbours N, Nᵢ₋₁, Nᵢ₊₁, defined later in more detail, to whom the data packet is or was intended to be sent to in the next or previous hop, respectively, a field 222 containing address and/or identification information about the source 5 (or Nᵢ), i.e. the origin 5 (or Nᵢ) of the data packet 2, and a flag 223 which will be discussed later. It must be emphasised that the order of fields as illustrated in Figure 2 is only given as an example and that these fields could be arranged by one skilled in the art in any other order. Furthermore, one skilled in the art may decide to add further fields to header 22.

In wired networks, the transmission of information from one node to another is facilitated by wires interconnecting these nodes, whereby routing algorithms typically consult routing tables to find a path through the network. Hence, these routing algorithms track the topology of a wired network and maintain respective routing tables which form the basis for choosing appropriate paths through the network. Obviously, there are other criteria, such as a balanced load on different routes of the wired network, which must be considered by these routing algorithms, but they are not a subject of this invention. In wireless networks, however, signals are typically emitted in all directions and, as opposed to wired networks, there are no physical paths between individual nodes, i.e. stations. Thus, in wireless networks with mobile stations it is not possible to establish the permanent topology of the network nor to store a permanent routing table.

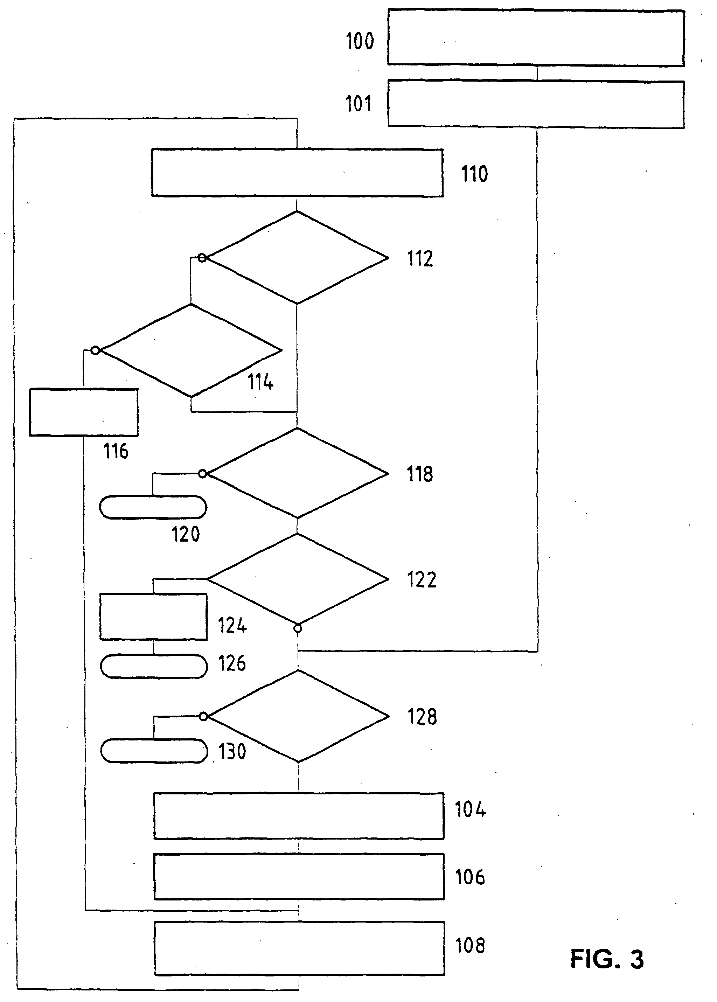

If we define neighbours N, Nᵢ₋₁, Nᵢ₊₁ of a particular node Nᵢ to be nodes, i.e. stations, N, Nᵢ₋₁, Nᵢ₊₁ which are able to receive signals from said particular node N;, we may interpret the possibility of communicating with neighbours N, Nᵢ₋₁, Nᵢ₊₁ as setting up or establishing virtual links to these neighbouring nodes, i.e. stations, N, Nᵢ₋₁, Nᵢ₊₁ in the "neighbourhood" of said particular node Nᵢ. Thus, the question for an intermediate node Nᵢ of how to route a packet 2 through a wireless network 3 becomes the question of which neighbour N, Nᵢ₋₁, Nᵢ₊₁ a packet 2 should be passed on to. For that purpose, each node, i.e. station, Nᵢ in the wireless network 3 tracks all his neighbours N, Nᵢ₋₁, Nᵢ₊₁ in step 100 illustrated in Figure 3, by "listening" for their packets 2, i.e. by monitoring any packet 2 that can be received at that particular node, and maintains a local table with information about these neighbours N, Nᵢ₋₁, Nᵢ₊₁. The tracking station Nᵢ can identify its neighbours N, Nᵢ₋₁, Nᵢ₊₁ based on identification information contained in the data packet 2 and updated at each hop with the sender's identification. Depending on the embodiment variant this identification information may be obtained by decoding the header 22 where the information may be contained in the source field 222 if this field is updated at each hop, it may be contained in an additional field not illustrated because the source field 222 is not changed but used to indicate the initial origin of the packet 2, or the identification information may be part of the data field 21 where it may be inserted by other protocol layers not subject of this invention. In the case where nodes are represented by a mobile radio phone, for example, the information obtained can be stored, for example, in its local memory or in a chipcard removably connected to a said mobile radio phone.

Although the wireless network 3 is not physically wired, through monitoring the neighbourhood, as described above, a network 3 with virtual links, or connections, is created, which may be thought of as being wired. Essentially, all routing methods for wired networks known to one skilled in the art and not based on a centrally stored representation of a (permanent) topology of the network, for instance methods based on routing and flow control, could now be applied to this virtually wired network 3. One must keep in mind, however, that, as described above, a specific node Nᵢ knows only its neighbours N, Nᵢ₋₁, Nᵢ₊₁ but not the entire topology of the network 3. In other words, the present invention does not require individual nodes, i.e. stations, 4, 5, 6, N, Nᵢ₋₁, Nᵢ, Nᵢ₊₁ to gather and store routing information in routing tables nor do these nodes 4, 5, 6, N, Nᵢ₋₁, Nᵢ, Nᵢ₊₁ directly exchange routing information per se among each other. Routing decisions are based solely on information gleaned by nodes 4, 5, 6, N, Nᵢ₋₁, Nᵢ, Nᵢ₊₁ themselves. Thus, the routing method proposed may be based on an isolated adaptive algorithm, wherein routing decisions made in a particular station Nᵢ are based on information gathered by that station Nᵢ by monitoring the network traffic in its "neighbourhood", e.g. by tracking received packets 2, as was described above. In this way, routing decisions, i. e. the choice of which neighbouring node(s) N, Nᵢ₋₁, Nᵢ₊₁ packets are relayed to and thus the choice of how information is routed through the network 3, may be based on measurements or estimates of parameters such as current traffic, (local) topology, propagation conditions, distances (shortest path), delay times/requirements (fastest path), communication costs, bandwidth, or available power at the sender.

As was mentioned above, the presence of neighbouring stations, i.e. nodes N, Nᵢ₋₁, Nᵢ₊₁, is tracked in step 100 illustrated in Figure 3. The current traffic may be monitored, for instance, by tracking the number of packets 2 emitted by individual neighbours N, Nᵢ₋₁, Nᵢ₊₁ and by maintaining an up-to-date traffic indicator for each neighbouring station N, Nᵢ₋₁, Nᵢ₊₁, e.g. the number of packets 2 emitted by a particular station N, Nᵢ₋₁, Nᵢ₊₁ during a pre-defined time period and divided by this time period. As nodes 4, 5, 6, N, Nᵢ₋₁, Nᵢ, Nᵢ₊₁ may be identified and addressed by their (approximate) position, e.g. determined by the Global Positioning System (GPS) or by a terrestrial positioning system (TPS), the distance from a particular station Nᵢ to its neighbours N, Nᵢ₋₁, Nᵢ₊₁ and/or the distance from a neighbouring node N, Nᵢ₋₁, Nᵢ₊₁ to the sink 6 may be easily determined by that particular station Nᵢ by calculating the distance based on its own position, the position of the sink 6 indicated by the sink field 220 of the packet to be routed, and the position of the neighbour N, Nᵢ₋₁, Nᵢ₊₁ contained in the packet 2 received last from the respective neighbouring node N, Nᵢ₋₁, Nᵢ₊₁, which latter position is indicated through means described above in the context of step 100. It may be possible also for stations to include additional information in the data packets 2, for example information about their sending power or and/or information relating to the cost of communication, which may be used for routing purposes. A mobile station may also track the expected communication costs for sending a packet to each of its neighbour stations, for instance, by using information relating to the cost of communication received from a neighbour station and/or by considering respective distance information.

The routing method may be implemented by means of a software program, as illustrated by way of example in Figure 3, which is stored in the local memory of a station, for instance a mobile radio phone, or in a chipcard which is removably connected to the mobile radio phone, for example. After a station, i.e. a node, Nᵢ receives a packet 2 in step 110 of the program, it tracks neighbour information relating to the sender Nᵢ₋₁ of the received packet 2 in step 100, as described above. Subsequently, in step 118 (step 112 will be described later), the program decodes the header information 22 and determines whether the receiving station Nᵢ is listed in the neighbour field 221 of the received packet 2, i.e. whether packet 2 was addressed to the receiving station Nᵢ. If this is not the case, processing of the received packet 2 ends in step 120 of the program. Otherwise, in step 122, the program decodes the header 22 information and determines whether the receiving station Nᵢ is listed as a sink 6 in field 220. If the receiving station Nᵢ is indeed a sink 6, the packet 2 is passed on internally in step 124 for further processing, for instance by protocol layers of the station's communication software, which is not a subject of this invention, and processing of the received packet 2 by this program ends in step 126.

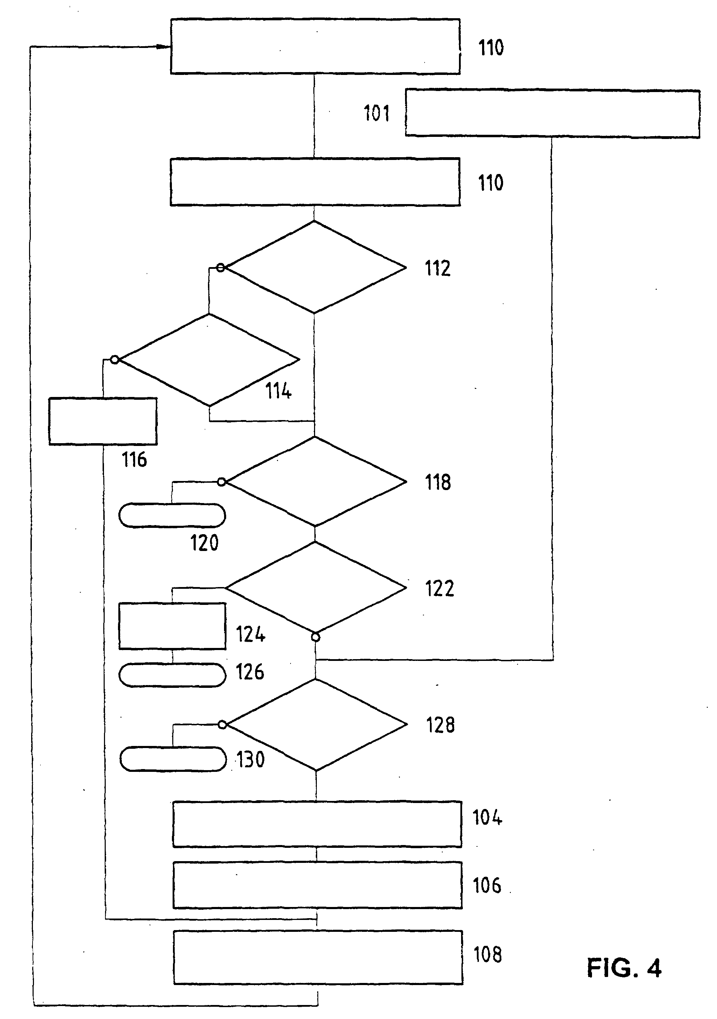

Figure 4 shows an alternative flow chart where step 118 from the flow chart illustrated in Figure 3 is omitted. Consequently, the program according to the flow chart illustrated in Figure 4 determines in step 122 whether the receiving station Nᵢ is listed as a sink 6 in field 220 prior to determining in step 128 whether or not it has to relay the packet 2, i.e whether it is listed as a neighbour in field 221. This alternative approach has the advantage that a sink station which receives a packet 2 without being addressed as a neighbour does not disgard the packet 2. In Figure 4, step 100, in which the presence of neighbouring stations, i.e. nodes N, Nᵢ₋₁, Nᵢ₊₁, is tracked is shown after step 110 to illustrate that tracking may occur immediately following the receipt of a packet in step 110.

In the case where the receiving station Nᵢ is not a sink 6, the program determines in step 128 of Figure 3 whether or not it has to relay the packet 2. If the receiving station Nᵢ does not have to relay the packet 2, processing of the packet 2 by the program executing the routing method ends in step 130. In the case where the station Nᵢ is addressed as a relay station Nᵢ, the routing decision, i.e. the choice of the neighbour N, Nᵢ₋₁, Nᵢ₊₁ to which the packet 2 will be sent to, is performed in step 104 of the program. The next neighbour Nᵢ₊₁, which may also be referred to as the next hop, may be the sink 6 or it may be just another intermediate relay station Nᵢ₊₁ on the path 7 to the sink 6. The routing decision is based on criteria as described above. In a first variant of step 104, the routing decision is made anew for every packet 2 received (packet switching). In a second variant of step 104, all data packets 2 from a given source 5 and/or to a given destination 6 are routed along the same path(s) 7 (message switching, funneling). Thus in this second variant of step 104, at a particular hop, the packets 2 are always sent to the same next neighbour(s) Nᵢ₊₁. In the second approach, packets may be forced along the same path(s), for example, during the duration of an end-to-end connection between a source station 5 and a sink station 6, or during the transmission of a message which comprises multiple packets 2, or simply by funneling all traffic to a particular destination 6 through the same relays. The first variant of step 104 may be more suitable for balancing the traffic load, as incoming packets 2 are distributed by the relay stations Nᵢ among neighbouring stations N, Nᵢ₊₁, i.e. they follow different logical paths 7, and it may also adapt more flexibly to the changing positions of mobile relay stations N, Nᵢ₊₁, as the decision gets made anew for each packet 2 received.

In step 106, the header information 22 is updated by the program. Step 106 replaces the contents of the neighbour field 221 with the identification, e.g. an address in the form of a position as described above or another unique identifier, respectively a list of identifications, of the next neighbour(s) Nᵢ₊₁ which resulted from the routing decision in step 104. Furthermore, step 106 may replace the contents of the source field 222 or, if the source field 222 is kept unchanged in order to indicate always the initial origin of the packet 2, update another additional header field not illustrated with the relay station's Nᵢ own identification.

As was mentioned above, in the context of step 106 of the program, multiple addresses (positions) of neighbouring nodes, i.e. stations, N, Nᵢ₊₁ may be inserted in the neighbour field 221 of the packet header 22. A packet 2 may thereby be routed concurrently along various paths, which corresponds to multi-path routing in wired networks and is also referred to as bifurcated routing. This approach may improve the routing reliability, as the chances of at least one of these packets reaching the sink 6 are increased. On the other hand, however, this improved reliability comes at the price of possibly decreasing communication efficiency, as a heavier load is put on the wireless network 3.

In an alternative approach, a relay station Nᵢ could simply broadcast a packet 2 to all its neighbours N, Nᵢ₋₁, Nᵢ₊₁ (flooding), without indicating individual identifications (address/position) of these neighbours N, Nᵢ₋₁, Nᵢ₊₁ in the packet header 22. However, this approach may be very inefficient as the network 3 may be unnecessarily flooded with packets 2. This approach may be used in a local wireless network with a limited number of stations.

Multi-destination routing can be achieved as in any other network, namely by inserting a list of destinations/sinks 6 in the sink field 220 of header 22. Special address values, i.e. multicast or group addresses, may be used to identify a specific group or subset of stations; a special broadcast address may be used to identify all stations. The same approach may also be used to address neighbours in field 221. In the latter case a multicast address may identify a subset of the neighbouring nodes, for example all neighbours of a certain make or sending power, whereas a broadcast address in field 221 may target all neighbours that can be reached from the sender (source or relay station).

In step 108 of the program, the relay station Nᵢ sends out the packet 2 with the header 22 adapted in the previous step 106.

Due to the fact that in wireless networks 3 signals are typically emitted in all directions, i.e. the transmission occurs omnidirectionally, the sender Nᵢ who sent a packet 2 to a relay station Nᵢ₊₁ is generally able to receive that packet 2 when it is sent out by said relay station Nᵢ₊₁ and thus may inspect the transmission of a relay station Nᵢ₊₁. As is illustrated in Figure 3, optional step 112 of the program, executing the routing method on a first station Nᵢ, checks if a received packet 2 was sent out by a second station Nᵢ₊₁ which was previously addressed by the first station Nᵢ as a relay station Nᵢ₊₁ (neighbour). If this is indeed the case, in step 114, the program determines whether the contents of said packet 2 received from said relay station Nᵢ₊₁ corresponds to the contents of the packet 2 originally sent by said first station Nᵢ and whether said received packet 2 did not get corrupted. For that purpose, data packets 2 may be temporarily stored by a sending station Nᵢ (step 108). If relay stations Nᵢ₊₁ relay packets in a deterministic manner, for example immediately after their arrival at the relay station Nᵢ₊₁, before sending out any other packets, this inspection/verification can be achieved without the necessity of other protocol data elements. Otherwise, this type of inspection/verification must include additional means to correctly identify a data packet 2, for example an additional packet number or additional protocol data elements inserted in the data field 21 by other protocol layers of the station's communication software, such as packet or frame sequence numbers. If the data contents of said sent and received packets 2 do not coincide, a correction is initiated in step 116 and the original packet 2 is resent by said first station in step 108, for instance. Thus, such an inspection/verification approach makes it possible to implement error-correction without implementation of an explicit feedback channel.

In cases where a station Nᵢ₊₁ is not able to transmit a packet 2 any further, for example because it does not have any information about neighbouring nodes which would be suitable relay stations for routing the said packet 2 along a path to the sink 6, said station Nᵢ₊₁ may set flag 223 (indicating "please help me") in the packet header 22 and send the packet 2 to its neighbours N, Nᵢ, either by using a broadcast or multicast address, as described above, or by listing specific neighbours N, Nᵢ in field 221 of the header 22. Upon receiving such a packet, each neighbour N, Nᵢ addressed in the header tries to find an alternative route/neighbour. However, flag 23 is not mandatory. Instead of using flag 23, the sender Nᵢ who sent a packet 2 to a relay station Nᵢ₊₁ may simply wait for a pre-defined period of time for the relay station Nᵢ₊₁ to relay the packet 2. If the expected relaying of said packet 2 does not take place within the pre-defined period of time, the said sender Nᵢ may try to find an alternative route/neighbour N, Nᵢ₋₁, thus, there is no need for flag 23. The latter approach may be more advantageous because in the first approach the packet 2 with flag 23 set may possibly get lost, for instance because the two stations Nᵢ, Nᵢ₊₁ are moving apart so that the packet 2 from the relay station Nᵢ₊₁ cannot reach the sender Nᵢ.

It should be clarified that preferably each mobile station 4, 5, 6, N, Nᵢ₋ ₁, Nᵢ, Nᵢ₊₁ in the wireless communication network 3 may function as a relay station. Even a source station 5 executes parts of the software program illustrated in Figure 3. In step 101 of the program, the source station 5 prepares the packet header 22 by setting its own identification (address/position) in the source field 222 and by setting the identification (address/position) of the destination in the sink field 220. In step 104, the program handles the routing decision as described above, i.e. depending on the destination, it determines the neighbour to which the packet 2 will be sent next. The next neighbour, which may also be referred to as the next hop, may be the destination, i.e. the sink 6, or it may be just a first intermediate relay station on the path 7 to the sink 6. The routing decision is based on criteria as described above.

By means of a software or hardware switch, activated, for instance, by a dedicated function key of the mobile station, it may also be possible to switch a mobile station, for example a mobile radio phone, e.g. a mobile radio phone in a GSM- or UMTS-network or a mobile radio phone in a mobile network according to other standards such as PCN, NMT, TACS, PDC, or DCS1800, to the regular mode, whereby any functionality of the routing method described will be bypassed so that packets will be submitted according to the conventional way, via base stations, and that the mobile station no longer functions as a potential relay station. This fact could also be reflected easily by means of a special flag in the packet or by using different formats of packets for conventional mode or routing mode so that a mobile station in regular mode is not being tracked as a potential relay station by stations operating in routing mode.

It should be pointed out that the actual end-to-end transport control as well as any error detection and correction is handled by protocol layers of the communication software which is not a subject of this invention. Such protocol layers, known to one skilled in the art, handle communication issues such as the proper sequencing of packets, the correction of lost or duplicated packets, for example by using frame or packet sequence numbers, or the detection and correction of corrupted packets, for example by means of cyclic redundancy checks (CRC). It should also be pointed out that the proposed routing method can be used for connection-oriented and/or connection-less types of communication protocols as well as for bidirectional and/or unidirectional communication modes.

The proposed method allows the routing of packets 2 from a source 5 to a destination 6 without centrally storing the exact topology of the network 3. For a station 4, 5, 6, N, Nᵢ₋₁, Nᵢ, Nᵢ₊₁ to be a relay station Nᵢ₋₁, Nᵢ, Nᵢ₊₁, it is sufficient to store information about its set of neighbours; however, there is no need to update routing information at a node 4, 5, 6, N, Nᵢ₋₁, Nᵢ, Nᵢ₊₁. In particular, there is no exchange of routing information between a central unit (controller) and a node 4, 5, 6, N, Nᵢ₋₁, Nᵢ, Nᵢ₊₁. It should be mentioned that the way of identifying and addressing source 5, relay Nᵢ₋₁, Nᵢ, Nᵢ₊₁ (, 4, N), and sink 6 stations, as it was described above, is not limited to using position information, but could also be done using unique identifiers which do not include position information. In this latter case, the proposed routing method would make use of additional routing algorithms known to one skilled in the art to find suitable routes from a source 5 to a sink 6 in the wireless telecommunication network 3.

Furthermore, it must be pointed out that not necessarily all stations are mobile stations. In some cases it may be advantageous to have some fixed relay stations (not base stations) which have the means necessary to act as a relay station as described above, possibly with a transmission power exceeding that of conventional mobile stations.

Additionally, fixed stations connected to a fixed network, for example the public switched telephone network (PSTN), a dedicated backbone, or the Internet, and provided with means to send and receive data to and from a said fixed network as well as means to send and receive packets 2 to and from a wireless telecommunication network 3 operating according to the proposed routing method may function as gateways between a said fixed network and a said wireless network 3. Thus, by means of such gateways, communication in a said wireless network 3 may be extended to a said fixed network and vice versa. Moreover, such gateways may also be used to interconnect geographically separated said wireless networks 3 via fixed networks.

The routing method described may be implemented, for example, in densely populated areas, for instance metropolitan areas, or in locations with a high concentration of people, for instance on the sites of private companies, government agencies, or university campuses. As mentioned before, the processing and storage means may be implemented in the local memory of mobile radio telephones, for instance, or in chipcards, for example SIM-cards, which may be removably connected to a mobile radio phone. Thus, mobile radio phones or chipcards may be sold to interested customers. Alternatively, at an appropriate fee, the respective software program may be loaded into the memory of the mobile radio phone or of the chipcard.

## Claims

1. Method for routing packets (2) within a wireless telecommunication network (3), said packets (2) being transmitted from one source station (5) in said network to at least one sink station (6) through one or a plurality of relay stations (Nᵢ₋₁, Nᵢ, Nᵢ₊₁), at least one of said relay stations (Nᵢ₋₁, Nᵢ, Nᵢ₊₁) being a mobile relay station, at least two of said stations (4, 5, 6, N, Nᵢ₋ ₁, Nᵢ, Nᵢ₊₁) being neighbour stations, wherein packets (2) are directly transmitted (108-110) through a wireless connection (7) between each pair of neighbour stations, wherein the routing of packets (2) in at least one of said mobile relay stations (Nᵢ) is based on information autonomously monitored by said mobile relay station (Nᵢ) about at least some of its neighbour stations (N, Nᵢ₋₁, Nᵢ₊₁), said information being obtained by said mobile relay station (Nᵢ) monitoring any packet (2) that is received at said mobile relay station (Nᵢ), extracting said information from said monitored packets (2), and locally storing said extracted information, **characterised**
**in that** the choice of at least one next mobile relay station (Nᵢ₊₁), chosen from among the set of all of the neighbour stations (N, Nᵢ₋₁, Nᵢ₊₁) of said mobile relay station (Nᵢ), made in said mobile relay station (Nᵢ) depends on the geographic position of said next mobile relay station (Nᵢ₊₁), said geographic position being part of said information extracted from said monitored packets (2).

2. Method according to the preceding claim, **characterised in that** said extracted information comprises identification information about the neighbour station (N, Nᵢ₋₁, Nᵢ₊₁) that sent the packet (2) from which the information was extracted.

3. Method according to one of the preceding claims, **characterised in that** each packet (2) sent to a said mobile relay station (Nᵢ) is routed in said mobile relay station (Nᵢ) to one neighbour mobile relay station (Nᵢ₊₁) chosen from among the set of all of its neighbour stations (N, Nᵢ₋₁, Nᵢ₊₁), unless said mobile relay station (Nᵢ) is a sink station (6).

4. Method according to one of the claims 1 to 2, **characterised in that** each packet (2) sent to a said mobile relay station (Nᵢ) can be routed in said mobile relay station (Nᵢ) to more than one neighbour mobile relay station (N, Nᵢ₊₁) chosen from among the set of all of its neighbour stations (N, Nᵢ₋₁, Nᵢ₊₁).

5. Method according to one of the preceding claims, **characterised in that** each packet (2) contains a header (22) indicating the source station (5) which emitted the packet (2) and at least one sink station (6) to which the packet is destined.

6. Method according to the preceding claim, **characterised in that** said header (22) contains at least one field (221) indicating at least one neighbour mobile relay station (Nᵢ₊₁) to which said packet (2) will be transmitted in the next hop.

7. Method according to the preceding claim, **characterised in that** said field (221) is replaced in each of said intermediate mobile relay stations (Nᵢ₋₁, Nᵢ, Nᵢ₊₁).

8. Method according to one of the preceding claims, **characterised in that** each mobile relay station (Nᵢ₋₁, Nᵢ, Nᵢ₊₁) checks (112) for each packet (2) received if it has previously relayed that packet, and **in that** case checks (114) whether the data contents of the packet (2) received coincides with the data contents of the original packet previously relayed and, if these data contents do not coincide, re-transmitts (116) the original packet (2).

9. Method according to one of the preceding claims, **characterised in that** a mobile relay station (Nᵢ₊₁), which does not have information about neighbouring nodes suitable as relay stations for routing a packet (2) along a path to the sink station (6), sets a flag (223) in the packet header (22), and a neighbour mobile relay station (Nᵢ), addressed **in that** packet header (22) and receiving such a said packet (2), tries to relay that packet (2) to an alternative neighbour mobile relay station (N, Nᵢ₋₁).

10. Method according to one of the preceding claims, **characterised in that** each mobile relay station (Nᵢ) checks for each packet (2) which it transmitted if that packet (2) is relayed by at least one of its neighbour mobile relay stations (Nᵢ₊₁), and if this is not the case re-transmits that packet (2) to at least one alternative neighbour mobile relay station (N, Nᵢ₋₁).

11. Method according to one of the preceding claims, **characterised in that** said geographic position is determined by a positioning system in at least some of said mobile relay stations (4, 5, 6, N, Nᵢ₋₁, Nᵢ, Nᵢ₊₁).

12. Method according to one of the preceding claims, **characterised in that** the choice (104) of the next mobile relay station (Nᵢ₊₁) made in the mobile relay stations (Nᵢ) depends on the distance between said next mobile relay station (Nᵢ₊₁) and said sink station (6).

13. Method according to one of the preceding claims, **characterised in that** the choice (104) of the next mobile relay station (Nᵢ₊₁) made in the mobile relay stations (Nᵢ) depends on the distance between said next mobile relay station (Nᵢ₊₁) and a said mobile relay station (Nᵢ).

14. Method according to one of the preceding claims, **characterised in that** the choice (104) of the next mobile relay station (Nᵢ₊₁) made in the mobile relay stations (Nᵢ) depends on the propagation conditions between a said mobile relay (Nᵢ) station and said next mobile relay station (Nᵢ₊₁).

15. Method according to one of the preceding claims, **characterised in that** the choice (104) of the next mobile relay station (Nᵢ₊₁) made in the mobile relay stations (Nᵢ) depends on the traffic conditions between a said mobile relay station (Nᵢ) and said next mobile relay station (Nᵢ₊₁).

16. Method according to the preceding claim, **characterised in that** the choice (104) of the next mobile relay station (Nᵢ₊₁) made in the mobile relay stations (Nᵢ) depends on the available bandwidth between a said mobile relay station (Nᵢ) and said next mobile relay station (Nᵢ₊₁).

17. Method according to one of the preceding claims, **characterised in that** the choice (104) of next mobile relay station (Nᵢ₊₁) made in the mobile relay stations (Nᵢ) depends on the measured or expected delay for transmitting a packet to said next mobile relay station (Nᵢ₊₁).

18. Method according to one of the preceding claims, **characterised in that** each mobile relay station (4, 5, 6, N, Nᵢ₋₁, Nᵢ, Nᵢ₊₁) is identified in said network (3) by its geographic position.

19. Method according to one of the preceding claims, **characterised in that** each mobile relay station (4, 5, 6, N, Nᵢ₋₁, Nᵢ, Nᵢ₊₁) is addressed in said network (3) by its geographic position.

20. Method according to one of the preceding claims, **characterised in that** it is performed on a network of mobile phone stations (4, 5, 6, N, Nᵢ₋₁, Nᵢ, Nᵢ₊₁).

21. Mobile relay station (4, 5, 6, N, Nᵢ₋₁, Nᵢ, Nᵢ₊₁) which can be used in a wireless telecommunication network (3) in which packets are transmitted from one source station (5) to at least one sink station (6) through one or a plurality of relay stations (Nᵢ₋₁, Nᵢ, Nᵢ₊₁), whereby said mobile relay station can be used as a relay station (Nᵢ₋₁, Nᵢ, Nᵢ₊₁), said mobile relay station (Nᵢ) comprising a sender and a receiver for directly sending (108) and receiving (110) packets (2) to and from a neighbour station (N, Nᵢ₋₁, Nᵢ₊₁) through a wireless connection (7), wherein said mobile relay station (Nᵢ) comprises a processor for autonomously monitoring information about at least some of its neighbour stations (N, Nᵢ₋₁, Nᵢ₊₁) by extracting information from any packet (2) that is received at said mobile relay station (Nᵢ) and by storing said extracted information in a memory of said mobile relay station (Nᵢ), and for making routing decisions (104) for packets (2) sent to said mobile relay station (Nᵢ) based on said stored information, **characterised**
**in that** the choice of at least one next mobile relay station (Nᵢ₊₁), chosen from among the set of all of the neighbour stations (N, Nᵢ₋₁, Nᵢ₊₁) of said mobile relay station (Nᵢ), made in said mobile relay station (Nᵢ) depends on the geographic position of said next mobile relay station (Nᵢ₊₁), said geographic position being part of said information extracted from said monitored packets (2).

22. Mobile relay station according to the preceding claim, **characterised in that** said extracted information comprises identification information about the neighbour station (N, Nᵢ₋₁, Nᵢ₊₁) that sent the packet (2) from which the information was extracted.

23. Mobile relay station according to one of the claims 21 or 22, **characterised in that** it further comprises a positioning system which can determine its geographic position in said wireless telecommunication network (3).

24. Mobile relay station according to one of the claims 21 to 23, **characterised in that** it further comprises
a memory for temporarily storing sent packets (2),
comparison means for comparing (114) received packets (2) with said packets stored in said memory to determine for each packet (2) received if said mobile relay station has previously relayed that packet, and to check **in that** case whether the data contents of the packet (2) received coincides with the data contents of the original packet previously relayed, and
re-transmission means for re-transmitting (116) the original packet (2) if these data contents do not coincide.

25. Mobile relay station (Nᵢ) according to the preceding claim, **characterised in that** it further comprises
checking means for checking for each packet (2) which it transmitted whether that packet (2) is relayed by at least one of its neighbour mobile relay stations (Nᵢ₊₁), and
re-transmission means for re-transmitting said packet (2) to at least one alternative neighbour mobile relay station (N, Nᵢ₋₁) if said packet (2) was not relayed by at least one of its neighbour mobile relay stations (Nᵢ₊₁).

26. Mobile relay station (Nᵢ₊₁) according to one of the claims 21 to 25, **characterised in that** it further comprises
flag-setting means for setting a flag (223) in the packet header (22) if said mobile relay station (Nᵢ₊₁) does not have information about neighbouring nodes suitable as relay stations for routing a packet (2) along a path to the sink station (6), and
means for relaying a received packet (2) to an alternative neighbour mobile relay station (N, Nᵢ₋₁), if said mobile relay station (Nᵢ) is addressed in the packet header (22) of that received packet and if a said flag (223) is set **in that** received packet (2).

27. Mobile relay station according to one of the claims 21 to 26, **characterised in that** it further comprises routing means for performing the routing method of one of the claims 1 to 21.

28. A program storage device readable by a programmable mobile station (4) which can be used as a mobile relay station in a wireless communication network (3), tangibly embodying a program of instructions executable by said programmable mobile relay station to perform the routing method of one of the claims 1 to 20.

29. Wireless communication network (3) comprising at least one mobile relay station (4) according to one of the claims 21 to 27.

## Patentansprüche

1. Verfahren für die Wegleitung von Paketen (2) innerhalb eines drahtlosen Telekommunikationsnetzes (3), wobei die genannten Pakete (2) von einer Quellenstation (5) im genannten Netzwerk durch eine oder eine Vielzahl von Relaisstationen (Nᵢ₋₁, Nᵢ, Nᵢ₊₁) an mindestens eine Senkenstation (6) übertragen werden, wobei mindesten eine der genannten Relaisstationen (Nᵢ₋₁, Nᵢ, Nᵢ₊₁) eine mobile Relaisstation ist, wobei mindestens zwei der genannten Stationen (4, 5, 6, N, Nᵢ₋₁, Nᵢ, Nᵢ₊₁) Nachbarstationen sind, wobei Pakete (2) zwischen jedem Paar von Nachbarstationen direkt durch eine drahtlose Verbindung (7) übertragen (108-110) werden, wobei die Wegleitung von Paketen (2) in mindestens einer der genannten mobilen Relaisstationen (Nᵢ) auf Informationen über mindestens einige ihrer Nachbarstationen (N, Nᵢ₋₁, Nᵢ₊₁) basiert, die durch autonome Überwachung durch die genannte mobile Relaisstation (Nᵢ) erhalten wurden, wobei die genannten Informationen dadurch erhalten werden, dass die genannte mobile Relaisstation (Nᵢ) jedes Pakets (2), das bei der genannten mobilen Relaisstation (Nᵢ) empfangen wird, überwacht, die genannten Information aus den genannten überwachten Paketen (2) entnimmt, und die genannten entnommenen Informationen lokal abspeichert, **dadurch gekennzeichnet,**
**dass** die in der genannten mobilen Relaisstation (Nᵢ) getroffene Wahl von mindestens einer nächsten mobilen Relaisstation (Nᵢ₊₁), die aus der Menge aller Nachbarstationen (N, Nᵢ₋₁, Nᵢ₊₁) der genannten mobilen Relaisstation (Nᵢ) gewählt wird, von der geografischen Position der genannten nächsten mobilen Relaisstation (Nᵢ₊₁) abhängt, wobei die genannte geografische Position Bestandteil der genannten Informationen ist, die aus den überwachten Paketen (2) entnommen werden.

2. Verfahren gemäss dem vorhergehenden Anspruch, **dadurch gekennzeichnet, dass** die genannten entnommenen Informationen Identifikationsinformationen über die Nachbarstation (N, Nᵢ₋₁, Nᵢ₊₁) umfassen, die das Paket (2) gesendet hat, von welchem die Informationen entnommen wurden.

3. Verfahren gemäss einem der vorhergehenden Ansprüche, **dadurch gekennzeichnet, dass** jedes Paket (2), das an eine genannte mobile Relaisstation (Nᵢ) gesendet wird, in der genannten mobilen Relaisstation (Nᵢ) an eine benachbarte mobile Relaisstation (Nᵢ₊₁) geleitet wird, die aus der Menge aller ihrer Nachbarstationen (N, Nᵢ₋₁, Nᵢ₊₁) gewählt wird, ausser wenn die genannte mobile Relaisstation (Nᵢ) eine Senkenstation (6) ist.

4. Verfahren gemäss einem der Ansprüche 1 oder 2, **dadurch gekennzeichnet, dass** jedes Paket (2), das an eine genannte mobile Relaisstation (Nᵢ) gesendet wird, in der genannten mobilen Relaisstation (Nᵢ) an mehr als eine der benachbarten mobilen Relaisstationen (N, Nᵢ₊₁) geleitet werden kann, die aus der Menge aller ihrer Nachbarstationen (N, Nᵢ₋₁, Nᵢ₊₁) gewählt werden.

5. Verfahren gemäss einem der vorhergehenden Ansprüche, **dadurch gekennzeichnet, dass** jedes Paket (2) einen Datenvorsatz (22) enthält, der die Quellenstation (5), die das Paket (2) ausgesendet hat, und mindestens eine Senkenstation (6) angibt, an welche das Paket gerichtet ist.

6. Verfahren gemäss dem vorhergehenden Anspruch, **dadurch gekennzeichnet, dass** der genannte Datenvorsatz (22) mindestens ein Feld (221) enthält, das mindestens eine benachbarte mobile Relaisstation (Nᵢ₊₁) angibt, an welche das genannte Paket (2) im nächsten Sprung übertragen wird.

7. Verfahren gemäss dem vorhergehenden Anspruch, **dadurch gekennzeichnet, dass** das genannte Feld (221) in jeder der genannten dazwischenliegenden mobilen Relaisstationen (Nᵢ₋₁, Nᵢ, Nᵢ₊₁) ersetzt wird.

8. Verfahren gemäss einem der vorhergehenden Ansprüche, **dadurch gekennzeichnet, dass** jede der mobilen Relaisstationen (Nᵢ₋₁, Nᵢ, Nᵢ₊₁) für jedes empfangene Paket (2) überprüft (112), ob sie dieses Paket vorgängig weitergeleitet hat, und in diesem Fall überprüft (114), ob der Dateninhalt des empfangenen Pakets (2) mit dem Dateninhalt des vorgängig weitergeleiteten Originalpakets übereinstimmt, und, wenn diese Dateninhalte nicht übereinstimmen, das Originalpaket (2) wieder überträgt (116).

9. Verfahren gemäss einem der vorhergehenden Ansprüche, **dadurch gekennzeichnet, dass** eine mobile Relaisstation (Nᵢ₊₁), die keine Informationen über benachbarte Knoten hat, die als Relaisstationen zum Weiterleiten eines Pakets (2) entlang einem Pfad zur Senkenstation (6) geeignet sind, im Paketdatenvorsatz (22) ein Flag (223) setzt, und dass eine benachbarte mobile Relaisstation (Nᵢ), die in diesem Paketdatenvorsatz (22) adressiert ist und ein solches genanntes Paket (2) empfängt, versucht, dieses Paket (2) an eine alternative benachbarte mobile Relaisstation (N, Nᵢ₋₁) weiterzuleiten.

10. Verfahren gemäss einem der vorhergehenden Ansprüche, **dadurch gekennzeichnet, dass** jede mobile Relaisstation (Nᵢ) für jedes Paket (2), das sie übertragen hat, überprüft, ob dieses Paket (2) durch mindestens eine ihrer benachbarten mobilen Relaisstationen (Nᵢ₊₁) weitergeleitet wird, und, wenn dies nicht der Fall ist, dieses Paket (2) an mindestens eine alternative benachbarte mobile Relaisstation (N, Nᵢ₋₁) weiterleitet.

11. Verfahren gemäss einem der vorhergehenden Ansprüche, **dadurch gekennzeichnet, dass** die genannte geografische Position durch ein Positionierungssystem in mindestens einigen der genannten mobilen Relaisstationen (4, 5, 6, N, Nᵢ₋₁ Nᵢ, Nᵢ₊₁) bestimmt wird.

12. Verfahren gemäss einem der vorhergehenden Ansprüche, **dadurch gekennzeichnet, dass** die in der mobilen Relaisstation (Nᵢ) getroffene Wahl (104) der nächsten mobilen Relaisstation (Nᵢ₊₁) von der Distanz zwischen der genannten nächsten Relaisstation (Nᵢ₊₁) und der genannten Senkenstation (6) abhängt.

13. Verfahren gemäss einem der vorhergehenden Ansprüche, **dadurch gekennzeichnet, dass** die in der mobilen Relaisstation (Nᵢ) getroffene Wahl (104) der nächsten mobilen Relaisstation (Nᵢ₊₁) von der Distanz zwischen der genannten nächsten mobilen Relaisstation (Nᵢ₊₁) und der genannten mobilen Relaisstation (Nᵢ) abhängt.

14. Verfahren gemäss einem der vorhergehenden Ansprüche, **dadurch gekennzeichnet, dass** die in der mobilen Relaisstation (Nᵢ) getroffene Wahl (104) der nächsten mobilen Relaisstation (Nᵢ₊₁) von den Ausbreitungsbedingungen zwischen der genannten mobilen Relaisstation (Nᵢ) und der genannten nächsten mobilen Relaisstation (Nᵢ₊₁) abhängt.

15. Verfahren gemäss einem der vorhergehenden Ansprüche, **dadurch gekennzeichnet, dass** die in der mobilen Relaisstation (Nᵢ) getroffene Wahl (104) der nächsten mobilen Relaisstation (Nᵢ₊₁) von den Verkehrsbedingungen zwischen der genannten mobilen Relaisstation (Nᵢ) und der genannten nächsten mobilen Relaisstation (Nᵢ₊₁) abhängt.

16. Verfahren gemäss einem der vorhergehenden Ansprüche, **dadurch gekennzeichnet, dass** die in der mobilen Relaisstation (Nᵢ) getroffene Wahl (104) der nächsten mobilen Relaisstation (Nᵢ₊₁) von der verfügbaren Bandbreite zwischen der genannten mobilen Relaisstation (Nᵢ) und der genannten nächsten mobilen Relaisstation (Nᵢ₊₁) abhängt.

17. Verfahren gemäss einem der vorhergehenden Ansprüche, **dadurch gekennzeichnet, dass** die in der mobilen Relaisstation (Nᵢ) getroffene Wahl (104) der nächsten mobilen Relaisstation (Nᵢ₊₁) von der gemessenen oder berechneten Verzögerung für die Übertragung eines Pakets an die genannte nächste mobile Relaisstation (Nᵢ₊₁) abhängt.

18. Verfahren gemäss einem der vorhergehenden Ansprüche, **dadurch gekennzeichnet, dass** jede mobile Relaisstation (4, 5, 6, N, Nᵢ₋₁ Nᵢ, Nᵢ₊₁) im genannten Netzwerk (3) durch ihre geografische Position identifiziert wird.

19. Verfahren gemäss einem der vorhergehenden Ansprüche, **dadurch gekennzeichnet, dass** jede mobile Relaisstation (4, 5, 6, N, Nᵢ₋₁ Nᵢ, Nᵢ₊₁) im genannten Netzwerk (3) durch ihre geografische Position adressiert wird.

20. Verfahren gemäss einem der vorhergehenden Ansprüche, **dadurch gekennzeichnet, dass** es in einem Netzwerk mobiler Telefonstationen (4, 5, 6, N, Nᵢ₋₁ Nᵢ, Nᵢ₊₁) ausgeführt wird.

21. Mobile Relaisstation (4, 5, 6, N, Nᵢ₋₁, Nᵢ, Nᵢ₊₁), welche in einem drahtlosen Telekommunikationsnetz (3) einsetzbar ist, in welchem Pakete (2) von einer Quellenstation (5) durch eine oder eine Vielzahl von Relaisstationen (Nᵢ₋₁, Nᵢ, Nᵢ₊₁) an mindestens eine Senkenstation (6) übertragen werden, wobei die genannte mobile Relaisstation als Relaisstation (Nᵢ₋₁, Nᵢ, Nᵢ₊₁) einsetzbar ist, wobei die genannte mobile Relaisstation (Nᵢ) einen Sender und einen Empfänger umfasst, um direkt durch eine drahtlose. Verbindung (7) Pakete (2) an eine benachbarte Station (N, Nᵢ₋₁, Nᵢ₊₁) zu senden (108) und von einer benachbarten Station (N, Nᵢ₋₁, Nᵢ₊₁) zu empfangen (110), wobei die genannte mobile Relaisstation (Nᵢ) einen Prozessor umfasst, zur autonomen Überwachung von Informationen über mindestens einige ihrer benachbarten Stationen (N, Nᵢ₋₁, Nᵢ₊₁) durch Entnehmen von Informationen aus jedem Paket (2), das bei der genannten mobilen Relaisstation (Nᵢ) empfangen wird, und durch Speichern der genannten entnommenen Informationen in einem Speicher der genannten mobilen Relaisstation (Nᵢ), und zum Fällen von Wegleitungsentscheiden (104) für Pakete (2), die an die genannte mobile Relaisstation (Nᵢ) gesandt wurden, basierend auf den genannten gespeicherten Informationen, **dadurch gekennzeichnet,**
**dass** die in der genannten mobilen Relaisstation (Nᵢ) getroffene Wahl von mindestens einer nächsten mobilen Relaisstation (Nᵢ₊₁), die aus der Menge aller Nachbarstationen (N, Nᵢ₋₁, Nᵢ₊₁) der genannten mobilen Relaisstation (Nᵢ) gewählt wird, von der geografischen Position der genannten nächsten mobilen Relaisstation (Nᵢ₊₁) abhängt, wobei die genannte geografische Position Bestandteil der genannten Informationen ist, die aus den genannten überwachten Paketen (2) entnommen werden.

22. Mobile Relaisstation gemäss dem vorhergehenden Anspruch, **dadurch gekennzeichnet, dass** die genannten entnommenen Informationen Identifikationsinformationen über die Nachbarstation (N, Nᵢ₋₁, Nᵢ₊₁) umfassen, die das Paket (2) gesendet hat, von welchem die Informationen entnommen wurden.

23. Mobile Relaisstation gemäss einem der Ansprüche 21 oder 22, **dadurch gekennzeichnet, dass** sie zudem ein Positionierungssystem umfasst, welches ihre geografische Position im genannten drahtlosen Telekommunikationsnetz (3) bestimmen kann.

24. Mobile Relaisstation gemäss einem der Ansprüche 21 oder 22, **dadurch gekennzeichnet, dass** sie zudem umfasst:
einen Speicher zur temporären Speicherung von gesendeten Paketen (2),
Vergleichsmittel zum Vergleichen (114) von empfangenen Paketen (2) mit genannten Paketen, die im genannten Speicher gespeichert sind, um für jedes empfangene Paket (2) zu bestimmen, ob die genannte mobile Relaisstation dieses Paket vorgängig weitergeleitet hat, und um in diesem Fall zu überprüfen, ob der Dateninhalt des empfangenen Pakets (2) mit dem Dateninhalt des vorgängig weitergeleiteten Originalpakets übereinstimmt, und
Wiederübertragungsmittel zur Wiederübertragung (116) des Originalpakets (2), wenn diese Dateninhalte nicht übereinstimmen.

25. Mobile Relaisstation (Nᵢ) gemäss dem vorhergehenden Anspruch, **dadurch gekennzeichnet, dass** sie zudem umfasst:
Prüfmittel zum Überprüfen für jedes Paket (2), das sie übertragen hat, ob das Paket (2) durch mindestens eine ihrer benachbarten mobilen Relaisstationen (Nᵢ₊₁) weitergeleitet wird, und
Wiederübertragungsmittel zur Wiederübertragung (116) des genannten Pakets (2) an mindestens eine alternative benachbarte mobile Relaisstation (N, Nᵢ₋₁), wenn das genannte Paket (2) nicht durch mindestens eine ihrer benachbarten mobilen Relaisstationen (Nᵢ₊₁) weitergeleitet wurde.

26. Mobile Relaisstation (Nᵢ₊₁) gemäss einem der Ansprüche 21 bis 25, **dadurch gekennzeichnet, dass** sie zudem umfasst:
Flag-Setzmittel zum Setzen eines Flags (223) im Paketdatenvorsatz (22), wenn die genannte mobile Relaisstation (Nᵢ₊₁) keine Informationen über benachbarte Knoten hat, die als Relaisstationen zum Weiterleiten eines Pakets (2) entlang einem Pfad zur Senkenstation (6) geeignet sind, und
Mittel zum Weiterleiten eines empfangenen Pakets (2) an eine alternative benachbarte mobile Relaisstation (N, Nᵢ₋₁), wenn die genannte mobile Relaisstation (Nᵢ) im Paketdatenvorsatz (22) dieses empfangenen Pakets adressiert ist und wenn ein genanntes Fiag (223) in diesem genannten Paket (2) gesetzt ist.

27. Mobile Relaisstation gemäss einem der Ansprüche 21 bis 26, **dadurch gekennzeichnet, dass** sie zudem Wegleitungsmittel für die Ausführung des Wegleitungsverfahrens eines der Ansprüche 1 bis 21 umfasst.

28. Eine Programmspeichervorrichtung, die durch eine programmierbare mobile Station (4) lesbar ist, welche als mobile Relaisstation in einem drahtlosen Kommunikationsnetz (3) verwendbar ist, und materiell ein Programm von Instruktionen verkörpert, die durch die genannte mobile Relaisstation zur Ausführung des Wegleitungsverfahrens eines der Ansprüche 1 bis 20 ausführbar sind.

29. Drahtloses Kommunikationsnetzwerk (3), das mindestens eine mobile Relaisstation (4) gemäss einem der Ansprüche 21 bis 27 umfasst.

## Revendications

1. Procédé d'acheminement de paquets (2) à l'intérieur d'un réseau de télécommunications sans fil (3), ces paquets (2) étant émis depuis une station émettrice (5), dans ce réseau, vers au moins une station collectrice (6) par l'intermédiaire d'une ou plusieurs stations-relais (Nᵢ₋₁, Nᵢ, Nᵢ₊₁), l'une au moins de ces stations-relais (Nᵢ₋₁, Nᵢ, Nᵢ₊₁) étant une station-relais mobile, au moins deux de ces stations-relais (4, 5, 6, N, Nᵢ₋₁, Nᵢ, Nᵢ₊₁) étant des stations voisines dans lesquelles des paquets (2) sont transmis directement (108-110) grâce à une liaison sans fil (7) entre deux stations voisines, avec lequel l'acheminement de paquets (2) dans au moins l'une des stations-relais mobiles mentionnées (Nᵢ) est fondé sur des renseignements surveillés de façon autonome par cette station-relais mobile mentionnée (Nᵢ) au sujet d'au moins certaines des stations voisines (N, Nᵢ, Nᵢ₊₁), ces renseignements étant obtenus par la station-relais mobile mentionnée (Nᵢ) en surveillant tout paquet (2) qui est reçu dans cette station-relais mobile (Nᵢ), en extrayant les renseignements mentionnés des paquets (2) surveillés et en stockant localement ces renseignements extraits, **caractérisé en ce que** le choix d'au moins une station-relais mobile voisine (Nᵢ₊₁), choisie parmi l'ensemble de toutes les stations voisines (N, Nᵢ₋₁, Nᵢ₊₁) de la station-relais mobile mentionnée (Nᵢ), fait dans celle-ci, dépend de la position géographique de la station-relais mobile voisine (Nᵢ₊₁), cette position géographique faisant partie des renseignements extraits des paquets (2) surveillés.

2. Procédé selon la revendication précédente, **caractérisé en ce que** les renseignements extraits comprennent des renseignements d'identification sur la station voisine (N, Nᵢ₋₁, Nᵢ₊₁) qui a émis le paquet (2) dont les renseignements ont été extraits.

3. Procédé selon l'une des revendications précédentes, **caractérisé en ce que** chaque paquet (2) envoyé à une station-relais mobile mentionnée (Nᵢ) est acheminé dans celle-ci vers une station-relais mobile voisine (Nᵢ₊₁) choisie parmi l'ensemble de toutes les stations voisines d'elle (N, Nᵢ₋₁, Nᵢ₊₁) si cette station-relais mobile (Nᵢ) n'est pas une station collectrice (6).

4. Procédé selon la revendication 1 ou 2, **caractérisé en ce que** chaque paquet (2) émis vers une station-relais mobile (Nᵢ) peut être acheminé, dans cette station-relais mobile (Nᵢ), vers plus d'une station-relais mobile voisine (N, Nᵢ₊₁) choisie parmi l'ensemble de toutes les stations voisines d'elle (N, Nᵢ₋₁, Nᵢ₊₁).

5. Procédé selon l'une des revendications précédentes, **caractérisé en ce que** chaque paquet (2) contient un en-tête (22) indiquant la station émettrice (5) qui a émis le paquet (2) et au moins une station collectrice (6) à laquelle le paquet est destiné.

6. Procédé selon la revendication précédente, **caractérisé en ce que** l'en-tête mentionné (22) contient au moins une zone (221) indiquant au moins une station-relais mobile voisine (Nᵢ₊₁) à laquelle le paquet (2) en question sera transmis lors de l'étape suivante.

7. Procédé selon la revendication précédente, **caractérisé en ce que** la zone mentionnée (221) est remplacée dans chacune des stations-relais mobiles intermé-diaires (Nᵢ₋₁, Nᵢ, Nᵢ₊₁).

8. Procédé selon l'une des revendications précédentes, **caractérisé en ce que** chaque station-relais mobile (Nᵢ₋₁, Nᵢ, Nᵢ₊₁) vérifie (112), pour chaque paquet (2) reçu, si elle a transmis ce paquet plus loin auparavant et que, dans ce cas, elle vérifie (114) si les données contenues dans ce paquet (2) reçu coïncident avec celles contenues dans le paquet d'origine transmis plus loin auparavant et, si ce n'est pas le cas, elle transmet de nouveau (116) le paquet (2) d'origine.

9. Procédé selon l'une des revendications précédentes, **caractérisé en ce qu'**une station-relais mobile (Nᵢ₊₁) n'ayant pas de renseignements sur des noeuds voisins qui conviendraient comme stations-relais pour acheminer un paquet (2) le long d'un itinéraire menant à la station collectrice (6), place un drapeau (223) dans l'en-tête (22) du paquet, et **en ce qu'**une station-relais mobile voisine (Nᵢ) désignée par son adresse dans cet en-tête (22) du paquet et recevant un paquet (2) de ce genre, essaie de transmettre ce paquet (2) à une autre station-relais mobile voisine (N, Nᵢ₋₁).

10. Procédé selon l'une des revendications précédentes, **caractérisé en ce que** chaque station-relais mobile (Nᵢ) vérifie, pour chaque paquet (2) qu'elle a transmis, si ce paquet (2) est transmis de nouveau par au moins l'une des stations-relais mobiles voisines d'elle (Nᵢ₊₁) et, si ce n'est pas le cas, retransmet ce paquet (2) à au moins une autre station-relais mobile voisine (N, Nᵢ₋ ₁).

11. Procédé selon l'une des revendications précédentes, **caractérisé en ce que** la position géographique mentionnée est déterminée par un système de positionnement au moins dans certaines des stations-relais mobiles mentionnées (4, 5, 6, N, Nᵢ₋₁, Nᵢ, Nᵢ₊₁).

12. Procédé selon l'une des revendications précédentes, **caractérisé en ce que** le choix (104) de la station-relais mobile suivante (Nᵢ₊₁) fait dans les stations-relais mobiles (Nᵢ) dépend de la distance entre cette station-relais mobile suivante (Nᵢ₊₁) et la station collectrice mentionnée (6).

13. Procédé selon l'une des revendications précédentes, **caractérisé en ce que** le choix (104) de la station-relais mobile suivante (Nᵢ₊₁) fait dans les stations-relais mobiles (Nᵢ) dépend de la distance entre cette station-relais mobile suivante (Nᵢ₊₁) et une station-relais mobile mentionnée (Nᵢ).

14. Procédé selon l'une des revendications précédentes, **caractérisé en ce que** le choix (104) de la station-relais mobile suivante (Nᵢ₊₁) fait dans les stations-relais mobiles (Nᵢ) dépend des conditions de propagation entre une station-relais mobile mentionnée (Nᵢ) et la station-relais mobile suivante (Nᵢ₊₁).

15. Procédé selon l'une des revendications précédentes, **caractérisé en ce que** le choix (104) de la station-relais mobile suivante (Nᵢ₊₁) fait dans les stations-relais mobiles (Nᵢ) dépend des conditions dans lesquelles a lieu le trafic entre une station-relais mobile (Nᵢ) et la station-relais mobile suivante (Nᵢ₊₁).

16. Procédé selon la revendication précédente, **caractérisé en ce que** le choix (104) de la station-relais mobile suivante (Nᵢ₊₁) fait dans les stations-relais mobiles (Nᵢ) dépend de la largeur de bande disponible entre une station-relais mobile (Nᵢ) et la station-relais mobile suivante (Nᵢ₊₁).

17. Procédé selon l'une des revendications précédentes, **caractérisé en ce que** le choix (104) de la station-relais mobile suivante (Nᵢ₊₁) fait dans les stations-relais mobiles (Nᵢ) dépend du délai mesuré ou prévu pour la transmission d'un paquet à la station-relais mobile suivante (Nᵢ₊₁).

18. Procédé selon l'une des revendications précédentes, **caractérisé en ce que** chacune des stations-relais mentionnées (4, 5, 6, N, Nᵢ₋₁, Nᵢ, Nᵢ₊₁) est identifiée, dans le réseau mentionné (3), par sa position géographique.

19. Procédé selon l'une des revendications précédentes, **caractérisé en ce que** chacune des stations-relais mobiles (4, 5, 6, N, Nᵢ₋₁, Nᵢ, Nᵢ₊₁) fait l'objet d'un adressage, dans le réseau mentionné (3), par sa position géographique.

20. Procédé selon l'une des revendications précédentes, **caractérisé en ce qu'**il est appliqué dans un réseau de postes téléphoniques mobiles (4, 5, 6, N, Nᵢ₋₁, Nᵢ, Nᵢ₊₁).

21. Station-relais mobile (4, 5, 6, N, Nᵢ₋₁, Nᵢ, Nᵢ₊₁) pouvant être utilisée dans un réseau de télécommunications sans fil (3) dans lequel des paquets sont transmis d'une station d'origine (5) à au moins une station collectrice (6) par l'intermédiaire d'une ou plusieurs stations-relais (Nᵢ₋₁, Nᵢ, Nᵢ₊₁), cette station-relais mobile (Nᵢ) comprenant un émetteur et un récepteur pour émettre (108) et recevoir (110) directement des paquets (2) vers une station voisine (N, Nᵢ₋₁, Nᵢ₊₁), et en provenance d'elle, par une connexion sans fil (7), cette station-relais mobile (Nᵢ) comprenant un processeur qui sert à surveiller de manière autonome des renseignements sur au moins certaines des stations voisines (N, Nᵢ₋₁, Nᵢ₊₁) en extrayant des renseignements de tout paquet (2) qui est reçu par cette station-relais mobile (Nᵢ) et en stockant les renseignements ainsi extraits dans une mémoire de cette station-relais mobile (Nᵢ), et pour prendre des décisions d'acheminement (104), pour des paquets (2) envoyés à cette station-relais mobile (Nᵢ), fondées sur ces renseignements mis en mémoire, **caractérisé en ce que** le choix d'au moins une station-relais mobile suivante (Nᵢ₊₁) parmi l'ensemble de toutes les stations voisines (N, Nᵢ₋₁, Nᵢ₊₁) de cette station-relais mobile (Nᵢ), fait dans cette dernière, dépend de la position géographique de cette station-relais mobile suivante (Nᵢ₊₁), cette position géographique faisant partie des renseignements extraits des paquets (2) surveillés mentionnés.

22. Station-relais mobile selon la revendication précédente, **caractérisée en ce que** les renseignements extraits comprennent des renseignements d'identification sur la station voisine (N, Nᵢ₋₁, Nᵢ₊₁) qui a envoyé le paquet (2) dont les renseignements ont été extraits.

23. Station-relais mobile selon la revendication 21 ou 22, **caractérisée en ce qu'**elle comprend en outre un système de positionnement qui peut déterminer sa position géographique dans le réseau de télécommunications mentionné (3).

24. Station-relais mobile selon l'une des revendications 21 à 23, **caractérisée en ce qu'**elle comprend en outre une mémoire servant au stockage temporaire des paquets envoyés (2), un dispositif permettant de comparer (114) les paquets reçus (2), ces paquets étant stockés dans la mémoire mentionnée, afin de déterminer, pour chaque paquet (2) reçu, si la station-relais mobile en question a transmis ce paquet auparavant et de vérifier, dans ce cas, si les données contenues dans le paquet (2) qui a été reçu coïncident avec les données contenues dans le paquet d'origine transmis auparavant, et un dispositif de retransmission servant à retransmettre (116) le paquet (2) d'origine si ces données ne coïncident pas.

25. Station-relais mobile (Nᵢ) selon la revendication précédente, **caractérisée en ce qu'**elle comprend en outre un dispositif de vérification servant à vérifier, pour chaque paquet (2) qui est transmis, si ce paquet (2) est transmis par au moins l'une des stations-relais mobiles voisines d'elle (Nᵢ₊₁), et un dispositif de retransmission servant à retransmettre ce paquet (2) à au moins une autre station-relais mobile voisine (N, Nᵢ₋₁) si le paquet (2) en question n'a pas été relayée par au moins l'une des stations-relais mobiles voisines d'elle (Nᵢ₊₁).

26. Station-relais mobile (Nᵢ₊₁) selon l'une des revendications 21 à 25, **caractérisée en ce qu'**elle comprend en outre un moyen de mise en place d'un drapeau (223) dans l'en-tête (22) du paquet si cette station-relais mobile (Nᵢ₊₁) n'a pas de renseignements sur les noeuds voisins qui conviennent comme stations-relais pour acheminer un paquet (2) le long d'un itinéraire aboutissant à la station collectrice (6), et un moyen permettant de relayer un paquet (2) reçu à une autre station-relais mobile voisine (N, Nᵢ₋₁) si cette station-relais mobile (Nᵢ) est désignée par son adresse dans l'en-tête (22) de ce paquet reçu et si un drapeau mentionné (223) est placé dans ce paquet reçu (2).

27. Station-relais mobile selon l'une des revendications 21 à 26, **caractérisée en ce qu'**elle comprend en outre un moyen d'acheminement destiné à appliquer le procédé d'acheminement de l'une des revendications 1 à 21.

28. Dispositif de stockage de programmes lisible par une station mobile programmable (4) qui peut être utilisée comme station-relais mobile dans un réseau de télécommunications sans fil (3), comprenant effectivement un programme d'instructions exécutable par la station-relais mobile programmable mentionnée pour appliquer le procédé d'acheminement de l'une des revendications 1 à 20.

29. Réseau de télécommunications sans fil (3) comprenant au moins une station-relais mobile (4) selon l'une des revendications 21 à 27.
